# EUROPEAN PATENT APPLICATION

(11) **EP 4 525 154 A2**
(43) Date of publication of application: **19.03.2025**
(21) Application number: 24199633.9
(22) Date of filing: 11.09.2024
(51) Int. Cl.: H01M 50/213, H01M 50/284, H01M 50/507, H01M 50/519, H01M 50/524, H01M 50/526, H01M 50/502, H01M 50/51, H01M 50/522, H01M 50/516

(54) **CCS ASSEMBLY AND BATTERY MODULE**

(30) Priority: 12.09.2023 CN 202322472913 U; 17.04.2024 WO PCT/CN2024/088259
(71) Applicant: Eve Energy Co., Ltd., Huizhou, Guangdong 516006 (CN)
(72) Inventor: ZHANG, Guojiang, Huizhou, Guangdong, 516006 (CN); REN, Chaoju, Huizhou, Guangdong, 516006 (CN)
(74) Representative: Murgitroyd & Company

(57) **Abstract**

The present disclosure provides a CCS assembly (1) and a battery module. The CCS assembly (1) includes a busbar group, a first insulating film (4), and an insulating support plate (3). The busbar group includes two output bars (10a, 10b) and a plurality of connecting bars (10c). The two output bars (10a, 10b) are correspondingly arranged at two ends of the battery module in a length direction, and the plurality of connecting bars (10c) are arranged between the two output bars (10a, 10b). The insulating support plate (3) is arranged parallel to the first insulating film (4). The first insulating film (4) is disposed on one side of the busbar group facing away from battery cells (20) and is attached to the busbar group. The insulating support plate (3) is disposed on one side of the busbar group facing the battery cells (20) and is attached to the busbar group.

## Description

### TECHNICAL FIELD

The present disclosure relates to the technical field of batteries, and in particular, to a Cells Contact System (CCS) assembly and a battery module.

### BACKGROUND

A CCS assembly of a battery module tends to be implemented using an integrated busbar for battery (IBB) solution. In the IBB solution, two layers of PET films are generally used to wrap busbars as a whole. However, the structural strength of the wrapped structure is low, which is particularly evident in a length direction of the CCS assembly. Thus, the CCS assembly is prone to deformation and bending during production and assembly, which is not conducive to production and transportation.

### SUMMARY

The present disclosure aims to solve the following technical problems: How to improve the structural strength of the CCS assembly.

In a first aspect, the present disclosure provides a CCS assembly applied to a battery module. The CCS assembly includes a busbar group, a first insulating film, and an insulating support plate. The busbar group includes two output bars and a plurality of connecting bars. The two output bars are correspondingly arranged at two ends of the battery module in a length direction, and the plurality of connecting bars are arranged between the two output bars. The insulating support plate is arranged parallel to the first insulating film. The first insulating film is disposed on one side of the busbar group facing away from battery cells and is attached to the busbar group. The insulating support plate is disposed on one side of the busbar group facing the battery cells and is attached to the busbar group.

In a second aspect, the present disclosure provides a battery module. The battery module includes battery cells and the above-mentioned CCS assembly. The battery cells pass through the insulating support plate to connect with the busbar group.

Beneficial effects: The insulating support plate of the present disclosure provides a longitudinal i.e. upward support force for the busbar group, and effectively insulates the busbar group and the battery cells; and the first insulating film integrally connects all output bars and connecting bars to realize an integrated integration of the busbar group. The first insulating film cooperates with the insulating support plate to realize the integrated integration of busbar group while ensuring the structural strength, which is conducive to maintaining high structural strength of the CCS assembly and effectively preventing deformation of the CCS assembly during production, assembly, and transportation.

### BRIEF DESCRIPTION OF THE DRAWINGS

FIG. 1 is a top-view structural schematic diagram of a CCS assembly provided by embodiments of the present disclosure.
FIG. 2 is a three-dimensional structural schematic diagram of a CCS assembly provided by embodiments of the present disclosure.
FIG. 3 is an exploded structural schematic diagram of a CCS assembly provided by embodiments of the present disclosure.
FIG. 4 is a three-dimensional structural schematic diagram of an insulating support plate provided by embodiments of the present disclosure.
FIG. 5 is a three-dimensional structural schematic diagram of a negative output bar provided by embodiments of the present disclosure.
FIG. 6 is a front-view structural schematic diagram of a negative output bar provided by embodiments of the present disclosure.
FIG. 7 is a three-dimensional structural schematic diagram of a positive output bar provided by embodiments of the present disclosure.
FIG. 8 is a front-view structural schematic diagram of a positive output bar provided by embodiments of the present disclosure.
FIG. 9 is a three-dimensional structural schematic diagram of a battery cell provided by embodiments of the present disclosure.
FIG. 10 is a three-dimensional structural schematic diagram of a connecting bar provided by embodiments of the present disclosure.
FIG. 11 is a schematic assembly diagram of a battery cell and an insulating support plate provided by embodiments of the present disclosure.

List of reference numerals: 1, CCS assembly; 10a, negative output bar; 10b, positive output bar; 10c, connecting bar; 11, outer connection part; 12, inner connection part; 121, main portion; 122, extension portion; 123a, negative connecting piece; 123b, positive connecting piece; 124, bending portion; 125, third positioning hole; 13, conductive unit; 131, positive part; 132, negative part; 20, battery cell; 200, positive pole post; 201, positive pole terminal; 202, negative pole terminal; 3, insulating support plate; 31, first welding hole; 32, second glue hole; 33, first positioning hole; 4, first insulating film; 41, second welding hole; 42, second positioning hole; 43, first glue hole; 44, third welding hole, 5, second insulating film; 51, outer wrapping portion; 52, inner wrapping portion; 521, fourth positioning hole; 6, FPC; 61, collection nickel sheet.

### DETAILED DESCRIPTION

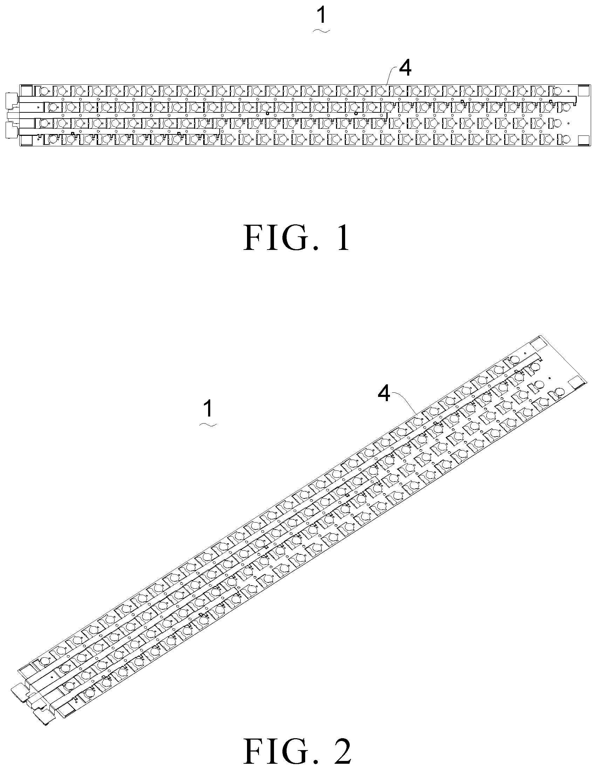

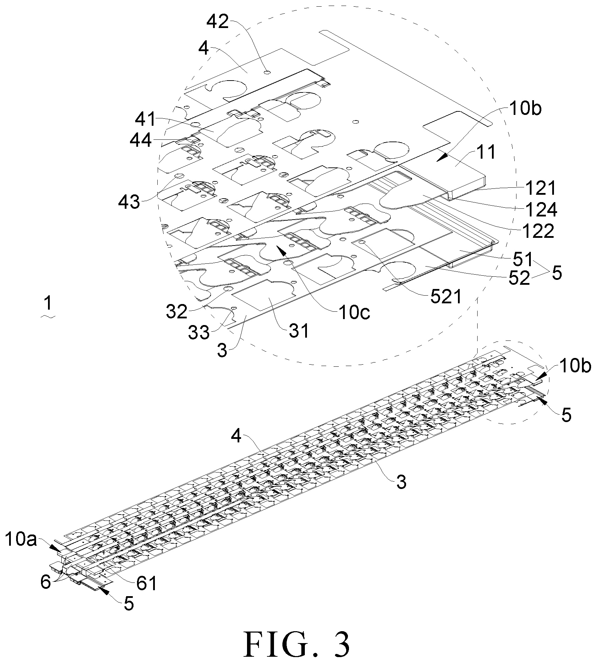

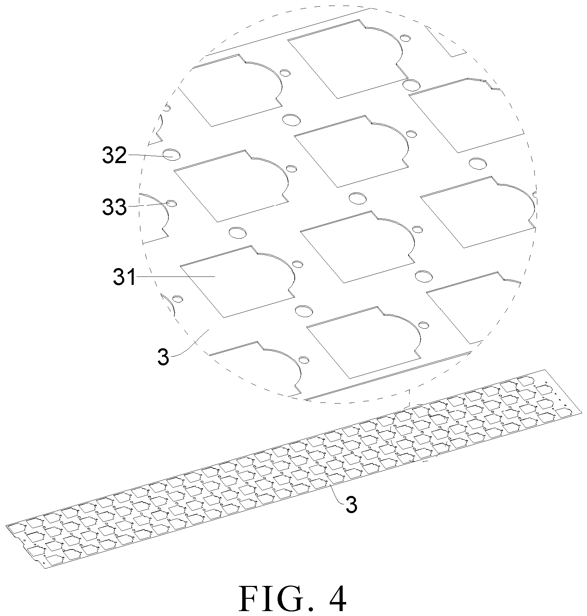

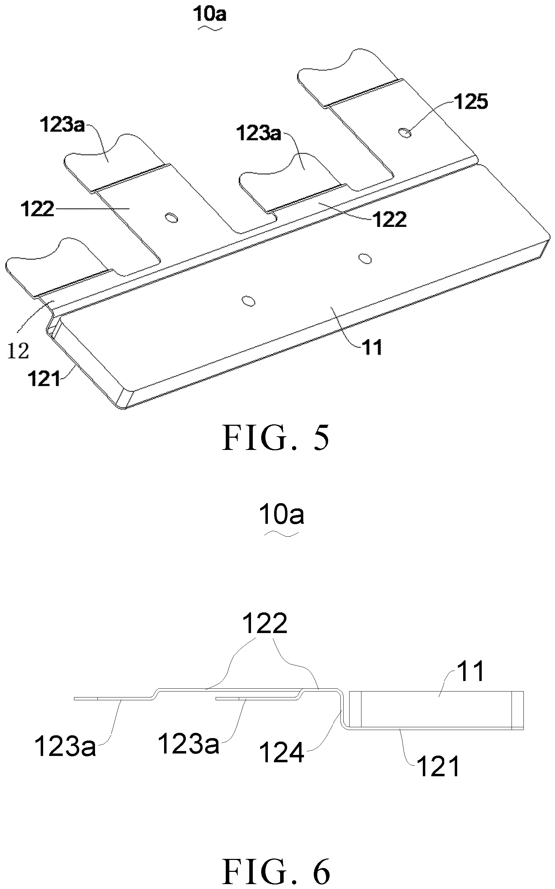

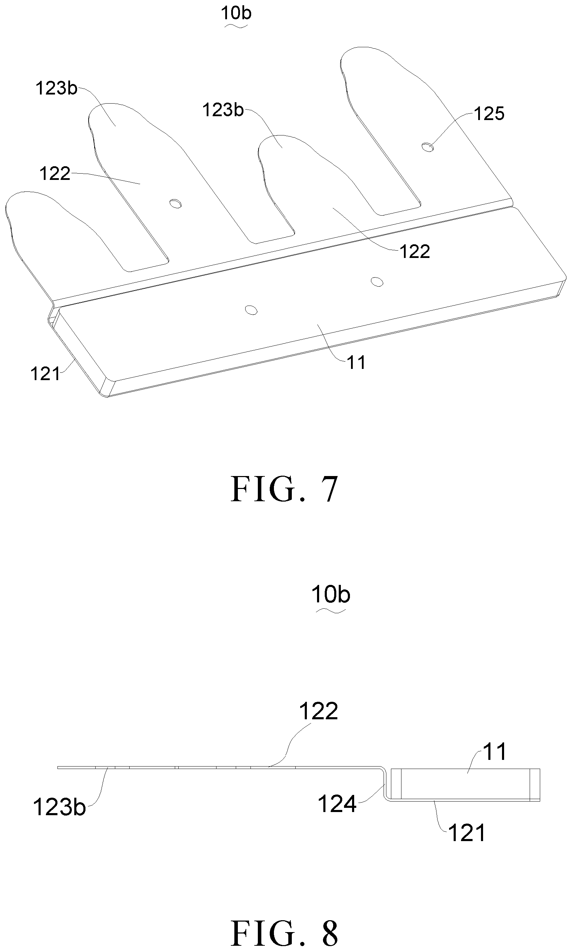

Referring to FIG. 1 to FIG. 11, a CCS assembly 1 applied to a battery module includes a busbar group, a first insulating film 4, and an insulating support plate 3. The busbar group includes two output bars and a plurality of connecting bars 10c. The two output bars are correspondingly arranged at two ends of the battery module in a length direction. The plurality of connecting bars 10c are arranged between the two output bars. The insulating support plate 3 is arranged parallel to the first insulating film 4, and the first insulating film 4 is disposed on one side of the busbar group facing away from battery cells 20 of the battery module and is attached to the busbar group. The insulating support plate 3 is disposed on one side of the busbar group facing the battery cells 20 and is attached to the busbar group. In the embodiments, as illustrated in FIG. 3, the insulating support plate 3 is located on a lower side of the busbar group, that is, the insulating support plate 3 is located on lower sides of the output bars and the connecting bars 10c. The insulating support plate 3 here provides a longitudinal i.e. upward support force for the busbar group and effectively insulates the busbar group and the battery cells 20. The first insulating film 4 integrally connects all the output bars and the connecting bars 10c to realize an integrated integration of the busbar group. The first insulating film 4 cooperates with the insulating support plate 3 to realize the integrated integration of the busbar group while ensuring the structural strength, which is conducive to maintaining a high structural strength of the CCS assembly 1 arranged using an IBB solution, which is conducive to production, assembly, and transportation of the CCS assembly 1 and effectively preventing deformation of the CCS assembly 1 during the production, assembly, and transportation.

In the embodiments, the first insulating film 4 is adhered to the busbar group. Further, optionally, the first insulating film 4 includes a base film and an adhesive layer. Optionally, the base film includes but is not limited to a PET film. When in use, the adhesive layer is configured to integrally bond the busbar group and the insulating support plate 3. The base film and the insulating support plate 3 wrap or clamp the busbar group and the adhesive layer to realize an integrated integration of the first insulating film 4, the busbar group, and the insulating support plate 3 of the CCS assembly 1, so that the CCS assembly 1 has high structural strength. That is, when in use, the first insulating film 4 and the insulating support plate 3 are adhered.

Of course, in other embodiments, the first insulating film 4 and the insulating support plate 3 may also be connected by heat riveting. Specifically, the insulating support plate 3 is provided with heat riveting posts (not shown in the figures), and the first insulating film 4 only needs to be provided with hole structures matching the hot riveting posts.

In the embodiments, the first insulating film 4 is cold-pressed or hot-pressed together with the busbar group. Specifically, during a cold pressing process, the first insulating film 4 is a cold pressed film, and when in use, components of the busbar group may be directly adhered to the first insulating film 4. During a hot pressing process, the first insulating film 4 is a hot-pressed film, and when in use, after components of the busbar group are adhered to the first insulating film 4, a high-temperature holding process is required to solidify the adhesive layer.

Specifically, the insulating support plate 3 includes but is not limited to a fiberglass board or a plastic board.

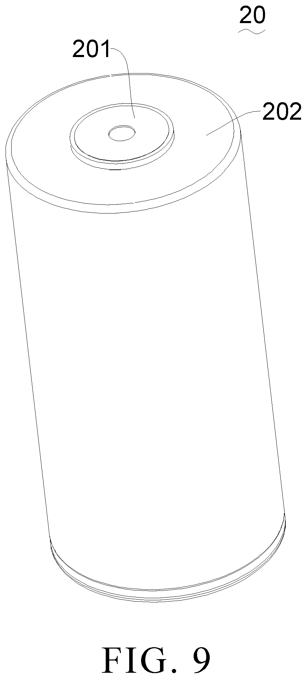

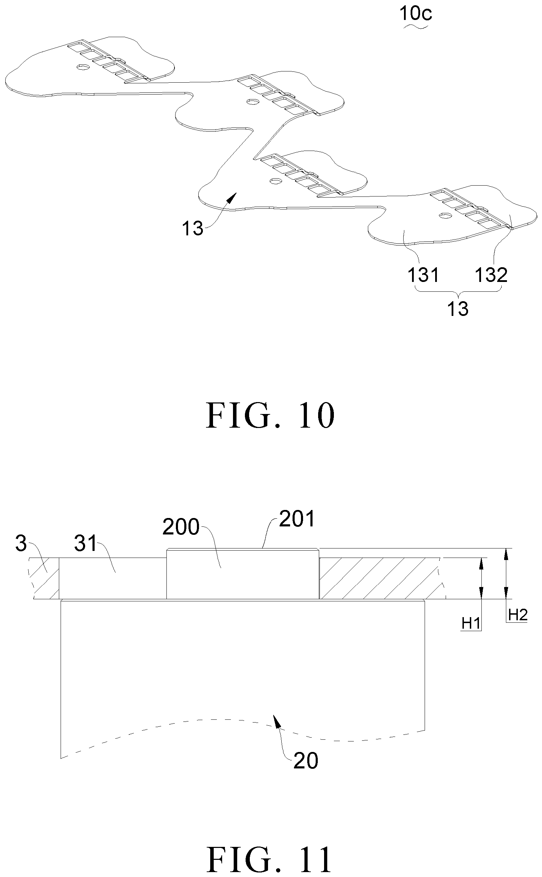

In the embodiments, the CCS assembly 1 is applied in a cylindrical power battery module. A structure of the battery cell 20 is illustrated in FIG. 9. A positive pole terminal 201 and a negative pole terminal 202 of the battery cell 20 are both arranged on one side toward the CCS assembly 1. As illustrated in FIG. 3 and FIG. 10. Each connecting bar 10c includes one or more conductive units 13. Each conductive unit 13 includes a positive part 131 and a negative part 132 connected with each other. The conductive unit 13 is configured to connect two adjacent battery cells 20 in series. Specifically, the positive part 131 of the conductive unit 13 is welded to the positive pole terminal 201 of one battery cell 20, and the negative part 132 of the same conductive unit 13 is welded to the negative pole terminal 202 of the other battery cell 20. The plurality of connecting bars 10c are arranged along the length direction of the battery module.

As illustrated in FIG. 3, and FIG. 5 to FIG. 8, the output bars include a positive output bar 10b and a negative output bar 10a. The positive output bar 10b is disposed at a positive output end of the battery module, and the negative output bar 10a is disposed at a negative output end of the battery module. Each output bar is provided with the same number of connecting pieces as the conductive units 13 constituting one single connecting bar 10c. The connecting piece of the negative output bar 10a is a negative connecting piece 123a configured to connect with the negative pole terminal 202 of one battery cell 20 which is located at the negative output end of the battery module. The connecting piece of the positive output bar 10b is a positive connecting piece 123b configured to connect with the positive pole terminal 201 of one battery cell 20 which is located at the positive output end of the battery module.

In the embodiments, first welding holes 31 are defined on the insulating support plate 3, and each first welding hole 31 passes through the insulating support plate 3. The busbar group is exposed toward the battery cells 20 through the first welding holes 31. Specifically, the positive parts 131 of the conductive units 13, the negative parts 132 of the conductive units 13, and the connecting pieces are exposed toward the battery cells 20 through the first welding holes 31. The first welding holes 31 here can not only ensure the welding of the conductive units 13 (the connecting bars 10c) and the battery cells 20, but also ensure the insulation between other parts of the connecting bars 10c and the battery cells 20, improving the safety of the CCS assembly 1 during operation. The first welding holes 31 here may assist in positioning during the assembly process of the CCS assembly 1 and the battery cells 20, which is beneficial to improving the assembly accuracy of the CCS assembly 1 and the battery cells 20.

Furthermore, second welding holes 41 are defined on the first insulating film 4, and each second welding hole 41 passes through the first insulating film 4. The busbar group is exposed toward one side facing away from the battery cells 20 through the second welding holes 41. Specifically, the positive parts 131 of the conductive units 13, the negative parts 132 of the conductive unit 13, and the connecting pieces are exposed toward the side facing away from the battery cells 20 through the second welding holes 41.

In the embodiments, the first welding holes 31 and the second welding holes 41 are provided correspondingly. When in use, a welding gun inserts into the first welding holes 31 to weld the busbar group and the battery cells 20.

In the embodiments, the first insulating film 4 is provided with first glue holes 43, and each first glue hole 43 passes through the first insulating film 4. The insulating support plate 3 is provided with second glue holes 32 corresponding to the first glue holes 43. The first glue hole 43 is communicated with the corresponding second glue hole 32. The first glue holes 43 and the second glue holes 32 are configured to inject foam glue into gaps between the battery cells 20 below the CCS assembly 1 in the battery module. After the CCS assembly 1 is assembled with the battery cells 20, the foam glue is injected from the first glue holes 43, and the foam glue enters the positions of the battery cells 20 through the second glue holes 32.

Furthermore, the second glue hole 32 is communicated with the gap between two adjacent battery cells 20 corresponding to the second glue hole 32. Such arrangement is conducive to a smooth injection of the foam glue into the gap between the two adjacent battery cells 20, which may effectively improve the injection efficiency of the foam glue. Moreover, part of the second glue holes 32 can discharge excess foam glue from the first glue holes 43 during a foaming process, thereby preventing the CCS assembly 1 from being excessively lifted when the foam glue is foaming toward the CCS assembly 1, thus avoiding false welding between the busbar group and the battery cells 20.

In the embodiments, as illustrated in FIG. 3 and FIG. 5 to FIG. 8, the output bar includes an inner connection part 12 and an outer connection part 11. The outer connection part 11 is connected to the inner connection part 12, and they are separate parts. A thickness of the outer connection part 11 is greater than a thickness of the inner connection part 12. The insulating support plate 3 abuts against a side surface of the inner connection part 12 facing the battery cells 20 in its thickness direction. The insulating support plate 3 abutting the inner connection part 12 can support the thin inner connection part 12, improve the structural strength of the inner connection part 12, and effectively prevent the inner connection part 12 from being damaged during the transportation of the CCS assembly 1. Moreover, the output bar composed of separately arranged outer connection part 11 and inner connection part 12 has simple processing technology and low production costs. Moreover, the structural design in which the thickness of the outer connection part 11 is greater than the thickness of the inner connection part 12 may effectively improve the structural strength of the output bar, thereby improving the reliability of the connection structure between the modules when they are connected in series. In the embodiments, the inner connection part 12 is integrally stamped and formed. The inner connection part 12 and the outer connection part 11 are welded. In the embodiments, the connecting pieces are arranged on the inner connection part 12.

Furthermore, the inner connection part 12 includes a main portion 121 connected to the outer connection part 11. One or more extension portions 122 are provided on one side of the main portion 121 away from the outer connection part 11. The extension portion 122 is configured to connect with the positive pole terminal 201 or the negative pole terminal 202 of the battery cell 20. The insulating support plate 3 abuts against the extension portion 122. An extending direction of the extension portion 122 here is parallel to an extending direction of the main portion 121, and the extension portions 122 are connected to the main portion 121 by a bending portion 124. Furthermore, the main portion 121, the bending portion 124, and the one or more extension portions 122 are integrally formed. In the embodiments, the outer connection part 11 is provided in an area corresponding to the main portion 121. The outer connection part 11 may increase the structural strength of the main portion 121, and the insulating support plate 3 abutting the extension portions 122 may increase the structural strength of the extension portions 122. Thus, the structural strength of the inner connection part 12 may be improved as a whole. The structural arrangement of the insulating support plate 3 abutting against the extension portions 122 may balance the structural strength of each area of the inner connection part 12. In the embodiments, a number of the extension portions 122 is equal to a number of the connecting pieces, and the connecting pieces are arranged in one-to-one correspondence at ends of the extension portions 122 away from the outer connection part 11.

As illustrated in FIG. 3, the CCS assembly 1 also includes second insulating films 5. The insulating support plate 3 is disposed between the second insulating film 5 and the output bar. The second insulating films 5 wrap the output bars, respectively. The second insulating film 5 here is made of the same material as the first insulating film 4 and is configured to wrap the corresponding output bar from bottom to top. Specifically, the second insulating film 5 is configured to wrap the main portion 121 from bottom to top to insulate the main portion 121 and the battery cells 20.

In the embodiments, the second insulating film 5 is adhered to one side of the main portion 121 facing the battery cells 20.

In the embodiments, the second insulating films 5 are provided at ends of the insulating support plate 3 in its length direction. The length direction of the insulating support plate 3 is parallel to the length direction of the battery module. The second insulating films 5 here cooperate with the insulating support plate 3 to insulate the busbar group and the battery cells 20. Specifically, as illustrated in FIG. 3, each second insulating film 5 includes an outer wrapping portion 51 and an inner wrapping portion 52 connected with each other. The outer wrapping portion 51 is attached to the corresponding output bar. Specifically, the outer wrapping portion 51 is attached to the main portion 121, and the inner wrapping portion 52 is attached to the insulating support plate 3.

In other embodiments, the two second insulating films 5 at ends of the insulating support plate 3 may be integrally formed, that is, the second insulating films 5 are designed as a whole body and spread on a side surface of the insulating support plate 3 facing the battery cells 20, and an end portion of the second insulating film 5 extends to the corresponding main portion 121. It should be noted that in the embodiments, the second insulating films 5 are provided with avoidance gaps corresponding to the first welding holes 31 to ensure that the busbar group can be welded to the battery cells 20.

In the embodiments, the insulating support plate 3 is provided with first positioning holes 33, and each first positioning hole 33 passes through the insulating support plate 3. The first insulating film 4 is provided with second positioning holes 42, and each second positioning hole 42 passes through the first insulating film 4. The extension portions 122 are provided with third positioning holes 125, and each third positioning hole 125 passes through the corresponding extension portion 122. The second insulating films 5 are provided with fourth positioning holes 521, and each fourth positioning hole 521 passes through the corresponding second insulating film 5. The first positioning holes 33, the second positioning holes 42, the third positioning holes 125, and the fourth positioning holes 521 here are arranged correspondingly. When in use, after the first insulating film 4, the output bars, the insulating support plate 3, and the second insulating film 5 are assembled, the first positioning hole 33 is coaxial with the corresponding second positioning hole 42, the corresponding third positioning hole 125, and the corresponding fourth positioning hole 521, which is configured for the positioning assembly of the first insulating film 4, the output bars, the insulating support plate 3, and the second insulating film 5, thereby improving the assembly accuracy of CCS assembly 1.

In the embodiments, as illustrated in FIG. 11, a thickness of the insulating support plate 3 is defined as H1, a height of a positive pole post 200 of the battery cell 20 is defined as H2, and the positive pole post 200 of the battery cell 20 passes through the insulating support plate 3 and is connected to the busbar group, where 0 < H1 ≤ H2. The positive pole terminal 201 of the battery cell 20 is located on an end surface of the positive pole post 200 facing away from the negative pole terminal 202 of the battery cell 20. The positive pole post 200 passes through the first welding hole 31 and is connected to the busbar group. The structural design of 0 < H1 ≤ H2 may prevent the insulating support plate 3 from interfering with the connection between the battery cell 20 and busbar group to prevent false welding between them.

As illustrated in FIG. 3, the CCS assembly 1 also includes a flexible printed circuit (FPC) 6 sandwiched between the first insulating film 4 and the busbar group. The FPC 6 is provided with collection nickel sheets 61 configured for connecting with the busbar group. The first insulating film 4 is provided with third welding holes 44 for exposing the collection nickel sheets 61. The FPC6 here collects the voltage information of the battery module by the collection nickel sheets 61 to monitor an operation condition of the battery cells. The structural design of the third welding holes 44 exposing the collection nickel sheets 61 facilitates the welding operation of the collection nickel sheets 61 and the corresponding busbar group during the assembly process.

The embodiments also provide a battery module. The battery module includes battery cells 20 and the aforementioned CCS assembly 1. The battery cells 20 pass through the insulating support plate 3 and are connected to the busbar group. The battery module is easy to assemble and has high safety.

## Claims

1. A cells contact system (CCS) assembly (1), applied in a battery module and **characterized by** comprising:
a busbar group, comprising two output bars (10a, 10b) and a plurality of connecting bars (10c), wherein the two output bars (10a, 10b) are correspondingly arranged at two ends of the battery module in a length direction, and the plurality of connecting bars (10c) are arranged between the two output bars (10a, 10b);
a first insulating film (4); and
an insulating support plate (3), arranged parallel to the first insulating film (4),
wherein the first insulating film (4) is disposed on one side of the busbar group facing away from battery cells (20) of the battery module and is attached to the busbar group, and the insulating support plate (3) is disposed on one side of the busbar group facing the battery cells (20) and is attached to the busbar group.

2. The CCS assembly according to claim 1, **characterized in that** the first insulating film (4) is adhered to the busbar group.

3. The CCS assembly according to claim 1 or claim 2, **characterized in that** the insulating support plate (3) is provided with first welding holes (31) each passing through the insulating support plate (3), and the busbar group is exposed toward the battery cells (20) through the first welding holes (31).

4. The CCS assembly according to claim 1 or claim 2, **characterized in that** the first insulating film (4) is provided with second welding holes (41) each passing through the first insulating film (4), and the busbar group is exposed toward one side facing away from the battery cells (20) through the second welding holes (41).

5. The CCS assembly according to claim 1 or claim 2, **characterized in that** the first insulating film (4) is provided with first glue holes (43) each passing through the first insulating film (4), the insulating support plate (3) is provided with second glue holes (32) corresponding to the first glue holes (43), and each of the first glue holes (43) is communicated with a corresponding one of the second glue holes (32); and
each of the second glue holes (32) is communicated with a gap between two corresponding and adjacent ones of the battery cells (20).

6. The CCS assembly according to claim 1, **characterized in that** each of the output bars (10a, 10b) comprises:
an inner connection part (12); and
an outer connection part (11), connected to the inner connection part (12),
wherein the outer connection part (11) and the inner connection part (12) are separate parts;
a thickness of the outer connection part (11) is greater than a thickness of the inner connection part (12); and
the insulating support plate (3) abuts against a side surface of the inner connection part (12) facing the battery cells (20) in its thickness direction;
wherein the inner connection part (12) comprises:
a main portion (121), connected to the outer connection part (11); and
at least one extension portion (122), provided on one side of the main portion (121) facing away from the outer connection part (11), and configured to connect with a positive pole terminal (201) or a negative pole terminal (202) of one of the battery cells (20),
wherein the insulating support plate (3) abuts against the extension portion (122).

7. The CCS assembly according to any one of claims 1, 2, 5, and 6, **characterized by** further comprising two second insulating films (5), wherein the insulating support plate (3) is disposed between the second insulating films (5) and the output bars (10a, 10b), and one of the second insulating films (5) wraps one of the output bars (10a, 10b) that is correspondingly arranged.

8. The CCS assembly according to claim 7, **characterized in that** the second insulating films (5) are provided at ends of the insulating support plate (3) in its length direction; and
a length direction of the insulating support plate (3) is parallel to the length direction of the battery module.

9. The CCS assembly according to claim 7, **characterized in that** each of the second insulating films (5) comprises an outer wrapping portion (51) and an inner wrapping portion (52) connected with each other, the outer wrapping portion (51) is attached to a corresponding one of the output bars (10a, 10b), and the inner wrapping portion (52) is attached to the insulating support plate (3).

10. The CCS assembly according to any one of claims 1, 2, 5, and 6, **characterized in that** the insulating support plate (3) is a fiberglass board or a plastic board.

11. The CCS assembly according to claim 1, **characterized in that** the first insulating film (4) is cold-pressed or hot-pressed together with the busbar group.

12. The CCS assembly according to claim 1, **characterized in that** a thickness of the insulating support plate (3) is defined as H1, a height of a positive pole post (200) of each of the battery cells (20) is defined as H2;
the positive pole post (200) passes through the insulating support plate (3) and is connected to the busbar group; and
where 0 < H1 ≤ H2.

13. The CCS assembly according to claim 1, **characterized by** further comprising a flexible printed circuit (FPC) (6) sandwiched between the first insulating film (4) and the busbar group,
wherein the FPC (6) is provided with collection nickel sheets (61) configured for connecting with the busbar group; and
the first insulating film (4) is provided with third welding holes (44) for exposing the collection nickel sheets (61).

14. The CCS assembly according to claim 1, **characterized in that** the first insulating film (4) is adhered with the insulating support plate (3).

15. A battery module, **characterized by** comprising battery cells (20) and the CCS assembly (1) according to any one of claims 1-14, wherein the battery cells (20) pass through the insulating support plate (3) to connect with the busbar group.
